# EUROPÄISCHE PATENTSCHRIFT

(11) **EP 1 035 381 B1**
(45) Veröffentlichungstag und Bekanntmachung des Hinweises auf die Patenterteilung: **27.08.2003**
(21) Anmeldenummer: 99104675.6
(22) Anmeldetag: 09.03.1999
(51) Int. Cl.: F24D 3/16

(54) **Deckenverkleidung**
Ceiling cladding
Revêtement de plafond

(43) Veröffentlichungstag der Anmeldung: 13.09.2000
(73) Patentinhaber: Frenger Systemen BV Heiz- und Kühltechnik Gmbh, 64823 Gross-Umstadt (DE)
(72) Erfinder: Lessmann, Rolf, 64625 Bensheim (DE)
(74) Vertreter: KEIL & SCHAAFHAUSEN

(56) Entgegenhaltungen:
- DE-A- 3 941 618
- DE-A- 4 020 970
- US-A- 5 042 570

## Beschreibung

Die Erfindung bezieht sich auf eine Deckenverkleidung nach dem Oberbegriff des Anspruchs 1.

Eine derartige Deckenverkleidung ist beispielsweise aus der EP 0 406 476 B1 bekannt. Bei der bekannten Deckenverkleidung sind die Haltemagnete seitlich der ebenen Unterflächen an den Kontaktschienen angeordnet und liegen im Wesentlichen in einer Ebene mit den Unterflächen. Dies setzt voraus, dass die Querschnittsform der Kontaktschienen and die Querschnittsform der Haltemagnete angepasst ist. Außerdem müssen die Haltemagnete für die Montage an den Kontaktschienen befestigt sein.

Weiter ist aus der DE 40 20 970 A1 eine Heiz- oder Kühldecke bekannt, bei welcher Kassetten einer Kassettendecke an einem blockartigen Profilsystem befestigbar sind, indem auf das Profilsystem Permanentmagnete aufgesetzt werden.

Aufgabe der vorliegenden Erfindung ist es, bei einer Deckenverkleidung der eingangs genannten Art eine einfachere Montagemöglichkeit für die Deckenverkleidung bei verbesserter Wärmeübertragung vorzusehen.

Diese Aufgabe wird erfindungsgemäß im Wesentlichen durch die kennzeichnenden Merkmale des Anspruchs 1 gelöst. Auf diese Weise können die Haltemagnete weitgehend unabhängig von ihrer Form vor der Montage der Platten auf die Flanschabschnitte aufgelegt werden, ohne besonders montiert werden zu müssen. Die Materialstärke der Flanschabschnitte kann dabei so gering bemessen sein, dass die magnetische Haltekraft der Haltemagnete ohne weiteres ausreicht, um die Platten an die ebenen Unterflächen der Kontaktschienen anzuziehen. Selbst wenn die Platten aus verhältnismäßigen dünnen Stahlblech besehen, hängen sie nicht nach unten durch, sondern bleiben in gutem Wärmeübergangskontakt mit den Kontaktschienen. Die Anordnung der Magnete auf der Oberseite der Kontaktschienenflansche hat den zusätzlichen Vorteil eines geräuschfreien Ausgleichs von Temperaturspannungen der kassettenförmigen Platten. Die Kontaktschienenflansche, welche die Magnete tragen, verhalten sich (zwischen Magnet und kassettenförmigen Platten) wie ein Luftspalt. Dieser Abstand verhindert eine Übersättigung des Materials der kassettenförmigen Platten und somit die Ablagerung von Schmutzpartikeln auf deren Unterseite. Die Magnetkraft erreicht auf diese Weise dauerhaft ihren maximalen Anziehungswert. Die Anordnung der Magnete auf der Oberseite der Kontaktschienenflansche lässt, noch bei der Montage, die Minimierung der Magnetkraft auf das Notwendige zu. Genauso können Toleranzen aus Produktion und Montage gezielt ausgeglichen werden.

Dabei können die Haltemagnete ein- oder beidseitig der vertikalen Längsmittelebene, also entweder nur auf einem Flanschabschnitt oder auf beiden und ggf. auch gegeneinander versetzt auf den Flanschabschnitten angeordnet sein.

Gemäß einer weiteren Ausgestaltung der Erfindung sind die Haltemagnete als über Teillängen der Kontaktschienen verteilte oder über die gesamte Länge der Kontaktschienen durchlaufende Magnetstäbe oder -bänder ausgebildet, wobei eine Anpassung an die Gestalt der Flanschabschnitte unnötig ist.

Es ist aber auch möglich, die Haltemagnete, zum Beispiel formschlüssig, auf der Oberseite der Flanschabschnitte zu halten oder als Magnetband aufzukleben. Die Halterungen für die Haltemagnete an den Flanschabschnitten können über Teillängen der Kontaktschienen verteilte oder über die gesamte Länge der Kontaktschienen durchlaufende, die Haltemagnete übergreifende Profilabschnitte sein. Auf diese Weise können die Haltemagnete bereits vor Festlegung der Kontaktschienen an den Registerrohren auf den Flanschabschnitten montiert werden.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: eine isometrische Ansicht einer die Erfindung aufweisenden Deckenverkleidung,
- Fig. 2a: einen Querschnitt durch eine erfindungsgemäße Deckenverkleidung nach Fig. 1, und
- Fig. 2b: im Schnitt eine alternative Ausführung mit Halterungen für die Haltemagnete.

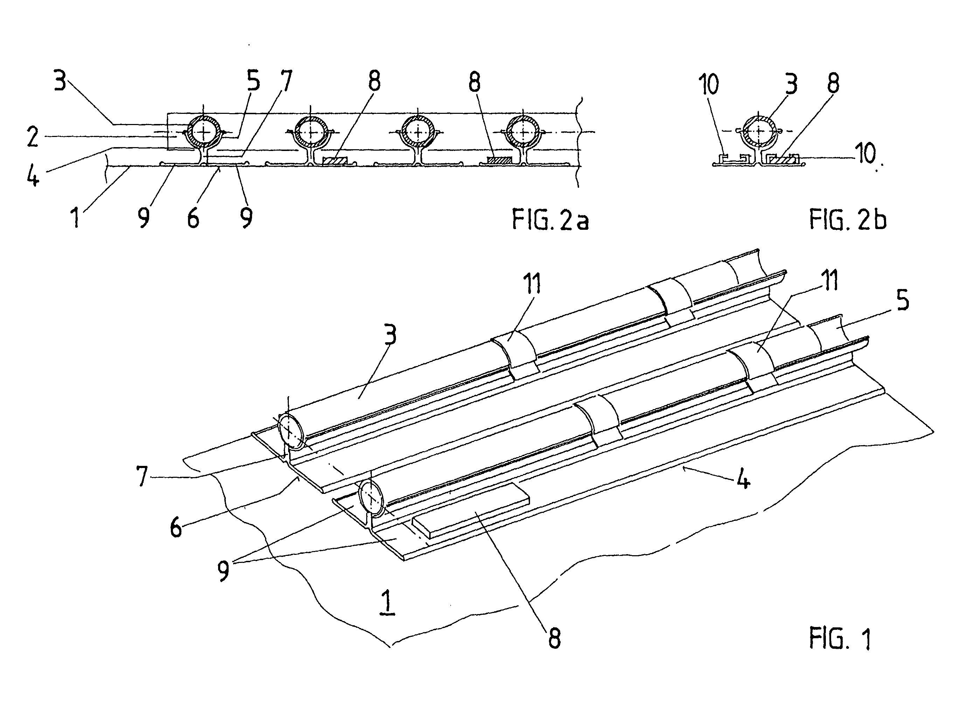

Gemäß den Figuren weist die Deckenverkleidung aus kassettenförmigen Platten 1 ein rasterförmiges System aus im wesentlichen senkrecht zueinander verlaufenden Verteilerrohren 2 und Registerrohren 3 für ein Heiz- oder Kühlmedium auf, so daß die Deckenverkleidung als Heizdecke bzw. Kühldecke eingesetzt werden kann. Zwischen den Registerrohren 3 und den Platten 1 sind Kontaktschienen 4 aus gut wärmeleitendem Material für den Wärmeübergang vorgesehen. Die Kontaktschienen 4 umfassen einerseits mit einem Kopfabschnitt 5 die Registerrohre 3 bereichsweise von unten und andererseits liegen sie mit einer ebenen Unterfläche 6 eines Fußabschnittes 7 an den Platten 1 an, um einen guten Wärmeübergang zu gewährleisten. Die Kontaktschienen 4 sind, wie aus Fig. 1 ersichtlich, mittels bügelförmiger Clipse 11 an den Registerrohren 3 gehalten. Die Platten 1 sind mittels Haltemagneten 8 an die ebene Unterfläche 6 der Kontaktschienen 4 angezogen bzw. verankert. Erfindungsgemäß liegen die Haltemagnete 8 auf Flanschabschnitten 9 der Kontaktschienen 4, welche bezüglich der vertikalen Längsmittelebene E der Kontaktschienen 4 seitlich abstehen. Wie aus Fig. 2a ersichtlich, können die Haltemagnete 8 auf der einen oder auf der anderen Seite der Längsmittelebene E oder auf beiden Seiten angeordnet sein. Ferner können die Haltemagnete 8, wie aus Fig. 1 ersichtlich, lediglich über eine Teillänge der Kontaktschiene 4 verlaufen, wobei mehrere Halteelemente über die Länge der Kontaktschienen 4 verteilt angeordnet sein können, oder die Haltemagnete 8 können sich über die gesamte Länge der Kontaktschienen 4 erstrecken, und beispielsweise die Form von Stäben oder Bändern aufweisen.

Unabhängig davon, daß die Haltemagnete 8 gemäß den Fig. 1 und 2a einfach auf die Oberseite der seitlichen Flanschabschnitte 9 aufgelegt sein können, ist es auch möglich, diese, wie beispielsweise in Fig. 2b veranschlaulicht, auf der Oberseite der Flanschabschnitte 9 formschlüssig oder auf andere Weise zu verankern, so daß sie an den Kontaktschienen 4 schon vor deren Befestigung an den Registerrohren 3 fest montiert werden können. Gemäß Fig. 2a sind die Halterungen 10 als Profilabschnitte auf der Oberseite der Flanschabschnitte 9 ausgebildet und übergreifen die Haltemagnete 8. So können die zum Beispiel bandförmigen Haltemagnete 8 auch von der Stirnseite her in die Halterungen 10 eingeschoben werden.

### Bezugszeichenliste:

- 1: Platten
- 2: Verteilerrohre
- 3: Registerrohre
- 4: Kontaktschienen
- 5: Kopfabschnitt
- 6: Unterfläche
- 7: Fußabschnitt
- 8: Haltemagnete
- 9: Flanschabschnitte
- 10: Halterungen
- 11: Clipse

## Patentansprüche

1. Deckenverkleidung aus kassettenförmigen Platten (1) mit einem rasterförmigen System aus Verteilerrohren (2) und Registerrohren (3) für ein Heiz- oder Kühlmedium und mit Kontaktschienen (4) für den Wärmeübergang zwischen den Registerrohren (3) und den Platten (1), wobei die Kontaktschienen (4) einerseits mit einem Kopfabschnitt (5) die Registerrohre (3) bereichsweise von unten umfassen und andererseits mit einem eine ebene Unterfläche (6) aufweisenden Fußabschnitt (7) an den Platten (1) anliegen, und wobei die Platten (1) mittels mit bezüglich der vertikalen Längsmittelebene der Kontaktschienen (4) seitlich abstehenden Flanschabschnitten (9) der Kontaktschienen (4) zusammenwirkenden Haltemagneten (8) an die ebene Unterfläche (6) der Kontaktschiene (4) angezogen sind, **dadurch gekennzeichnet, dass** die Haltemagnete (8) auf der Oberseite der Flanschabschnitte (9) gehalten sind und diese im Wesentlichen über ihre gesamte Breite an den Platten (1) anliegen.

2. Deckenverkleidung nach Anspruch 1, **dadurch gekennzeichnet, daß** Haltemagnete (8) ein- oder beidseitig der vertikalen Längsmittelebene (E) angeordnet sind.

3. Deckenverkleidung nach Anspruch 1 oder 2, **dadurch gekennzeichnet, daß** die Haltemagnete (8) als über Teillängen der Kontaktschienen (4) verteilte oder über die gesamte Länge der Kontaktschienen (4) durchlaufende Magnetstäbe oder -bänder ausgebildet sind.

4. Deckenverkleidung nach einem der vorhergehenden Ansprüche, **dadurch gekennzeichnet, daß** die Halterungen (10) für die Haltemagnete (8) an den Flanschabschnitten (9) über Teillängen der Kontaktschienen (4) verteilte oder über die gesamte Länge der Kontaktschienen (4) durchlaufende, die Haltemagnete (8) übergreifende Profilabschnitte sind.

## Claims

1. Ceiling panelling of cassette-shaped plates (1) comprising a grid-shaped system of distribution tubes (2) and register tubes (3) for a heating or cooling medium and comprising contact tracks (4) for the heat transfer between the register tubes (3) and the plates (1), the contact track (4) on the one hand embracing the register tubes (3) in part from below with a head section (5) and on the other hand lying flat with the plates (1) with a foot section (7) having a plane lower surface (6), and the plates (1) being tightened to the plane lower surface (6) of the contact tracks (4) by means of holding magnets (8) which cooperate with flange sections (9) of the contact tracks (4) which with respect to the vertical longitdinal central plane are pointing sideways, **characterized in that** the holding magnets (8) are held on the upper surface of the flange sections (9) and that they essentially lie flat to the plates (1) about their total width.

2. Ceiling panelling according to claim 1, **characterized in that** the holding magnets (8) are arranged at one side or at both sides of the vertical longitudinal plane (E).

3. Ceiling panelling according to claim 1 or 2, **characterized in that** the holding magnets (8) are formed as magnet rods or strips disptributed in partial lengths of the contact tracks (4) or running over the total length of the contact tracks (4).

4. Ceiling panelling according to one of the previous claims, **characterized in that** the supports (10) for the holding magnets (8) at the flange sections (9) are profile sections distributed over partial lengths of the contact tracks (4) or running over the total length of the contact tracks (4) overlapping the holding magnets (8).

## Revendications

1. Revêtement de plafond constitué de plaques (1) ayant la forme de cassettes avec un système quadrillé de tubes de distribution (2) et de tubes de registre (3) pour un fluide de chauffage ou de refroidissement et avec des rails de contact (4) pour le transfert de chaleur entre les tubes de registre (3) et les plaques (1), les rails de contact (4) entourant d'une part les tubes de registre (3) par le dessous avec une section de tête (5) et étant d'autre part adjacents aux plaques (1) avec une section de pied (7) ayant une face inférieure (6) plane, et les plaques (1) étant attirées contre la face inférieure (6) plane du rail de contact (4) au moyen d'aimants de soutien (8) coopérant avec des sections en collerette (9) des rails de contact (4), ces sections de bride (9) dépassant latéralement par rapport au plan médian longitudinal vertical des rails de contact (4), **caractérisé en ce que** les aimants de soutien (8) sont maintenus sur la face supérieure des sections en collerette (9) et que celles-ci sont essentiellement adjacentes aux plaques (1) sur toute leur largeur.

2. Revêtement de plafond selon la revendication 1, **caractérisé en ce que** des aimants de soutien (8) sont placés d'un côté ou des deux côtés du plan médian longitudinal vertical (E).

3. Revêtement de plafond selon la revendication 1 ou 2, **caractérisé en ce que** les aimants de soutien (8) sont des baguettes ou des bandes aimantées qui sont réparties sur des sections des rails de contact (4) ou qui s'étendent sur toute la longueur des rails de contact (4).

4. Revêtement de plafond selon l'une des revendications précédentes, **caractérisé en ce que** les fixations (10) pour les aimants de soutien (8) sur les sections en collerette (9) sont des sections de profilé maintenant les aimants de soutien (8) qui sont réparties sur des sections des rails de contact (4) ou qui s'étendent sur toute la longueur des rails de contact (4).
